(19) **Europäisches Patentamt / European Patent Office / Office européen des brevets**

(11) **EP 1 561 672 B1**

(12) **EUROPEAN PATENT SPECIFICATION**

(45) Date of publication and mention
of the grant of the patent:
**04.05.2011  Bulletin 2011/18**

(51) Int Cl.:
**B62D 11/18** *(2006.01)*     **B60W 10/10** *(2006.01)*

(21) Application number: **04004642.7**

(22) Date of filing: **01.03.2004**

(54) **Work machine with steering control**

Arbeitsmaschine mit Lenkungssteuerung

Machine de travail avec commande de direction

(84) Designated Contracting States:
**AT BE BG CH CY CZ DE DK EE ES FI FR GB GR HU IE IT LI LU MC NL PL PT RO SE SI SK TR**

(30) Priority: **06.02.2004  US 541943 P**

(43) Date of publication of application:
**10.08.2005  Bulletin 2005/32**

(73) Proprietor: **CATERPILLAR INC.**
**Peoria IL 61629-6490 (US)**

(72) Inventors:
  • **Strashny, Igor, c/o CATERPILLAR INC.**
  **Peoria, Illinois 61629-6490 (US)**

  • **Pruitt, Randall Dean,  c/o CATERPILLAR INC.**
  **Peoria, Illinois 61629-6490 (US)**
  • **Eyraud, Gilles,  c/o CATERPILLAR INC.**
  **Peoria, Illinois 61629-6490 (US)**

(74) Representative: **Wagner, Karl H.**
**Wagner & Geyer Partnerschaft**
**Patent- und Rechtsanwälte**
**Gewürzmühlstrasse 5**
**80538 München (DE)**

(56) References cited:
**GB-A- 2 221 518     US-A- 5 473 541**
**US-A- 5 611 405     US-A- 6 138 782**
**US-A1- 2002 193 927**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates generally to a work machine, and more particularly to a work machine having steering control.

Background

Work machines, including track-type tractors such as the D5 made by Caterpillar Inc., track-type loaders such as the 963 made by Caterpillar Inc., skid-steer loaders, hydraulic tracked excavators, military tanks, and other types of heavy machinery, are used for a variety of tasks. These work machines may include ratio control devices that transmit torque from an engine to one or more traction devices that move the work machine. These ratio control devices may include a hydrostatic transmission, an electric transmission, a mechanical transmission, or any other type of transmission known in the art. The engine may include a diesel engine, a gasoline engine, a natural gas engine, or any other engine configured to operate at a range of output speeds.

The traction devices may be independently manipulated to steer the work machine. For example, during a steering event, a brake may be applied to one or more of the traction devices located on one side of the work machine to allow one or more driven traction devices on the other side of the work machine to turn the work machine. Alternately, one or more driven traction devices located on one side of the work machine may be caused to rotate at a slower speed than or in a direction opposite to one or more driven traction devices located on the opposite side of the work machine to cause the work machine to turn.

Turning a work machine, by any of these methods, may require more torque from the ratio control devices than when the work machine travels in a straight direction. A ratio control device designed for efficiently propelling the work machine in a straight direction may not also have the torque capacity for efficiently turning the work machine at a given speed. Further, a ratio control device designed for efficiently turning the work machine at a given speed may be too large to efficiently propel the work machine in a straight direction.

U.S. Patent No. 6,654,676 (the '676 patent) issued to Nakagawa et al. on 25 November 2003, describes a steering system for a track-laying vehicle that attempts to account for the different torque requirements of turning and straight-line moving of a work machine. The '676 patent describes a steering system that includes an engine connected to a torque converter, which is connected to a transmission. The transmission is connected to a transverse shaft through a bevel gear that is coupled to right and left planetary gear mechanisms, each of the right and left planetary gear mechanisms being connected to sprockets. The '676 patent also describes a pump and a fixed displacement motor, the motor being coupled to the planetary gear mechanisms.

When a traveling lever in the steering system of the '676 patent is manually operated to cause a pivot turn of the vehicle, a brake is applied to one of the traction devices and the pump and motor are actuated to apply driving force to the planetary gear mechanisms. Simultaneously, the speed of the engine is reduced to prevent over-speed of the pump and motor. After the turn is complete, the driving force from the motor is interrupted from driving the planetary gear mechanisms.

While the steering system of the '676 patent may offer some improved efficiencies during a pivot turn, the steering system of the '676 patent may not provide any assistance during other types of turns. In addition, the torque converter, transmission, and planetary gear mechanism arrangement may be complex and costly.

US 6 138 782, US 2002/0193927, US 5 611405 A and US 5 473 541 disclose a control system for a tracked vehicle having an engine which directs power to first and second planetary drives connected to first and second track drive wheels. A hydraulic steering motor is connected to the ring gears of the first and second planetary drives, respectively. When actuated, the hydraulic steering motor is adapted to shift distribution of the power flow from the engine more towards one of the planetary drives. More power from the engine is required when the tracked vehicle turns.

GB 2 221518 A discloses an engine/transmission control system having first and second hydraulic transmission means for transmitting power from a power source to first and second traction means for moving a work machine. The control system is adapted to reduce the travel speed of the vehicle during vehicle turns in order to prevent the engine overloading or stalling due to increased power requirements.

The present invention is directed to increase the power capacity of a transmission transmitting power to a traction means during periods of increased power demand. In accordance with the present invention, work machine as set forth in claim 1 and a method a method of operating a work machine as set forth in claim 2 is provided. Preferred embodiments of the invention are claimed in the dependent claims.

Brief Description of the Drawings

Fig. 1 is a diagrammatic illustration of a work machine according to an exemplary embodiment of the present invention;

Fig. 2 is a diagrammatic illustration of a power system for a work machine according to an exemplary embodiment of the present invention;

Fig. 3 is a flowchart illustrating a method of operating a work machine according to an exemplary embodiment of the present invention; and

Fig. 4 is a graph illustrating a relationship between work machine travel speed, a directional change request, and a desired power source speed for a work machine according to an exemplary embodiment of the present invention.

Detailed Description

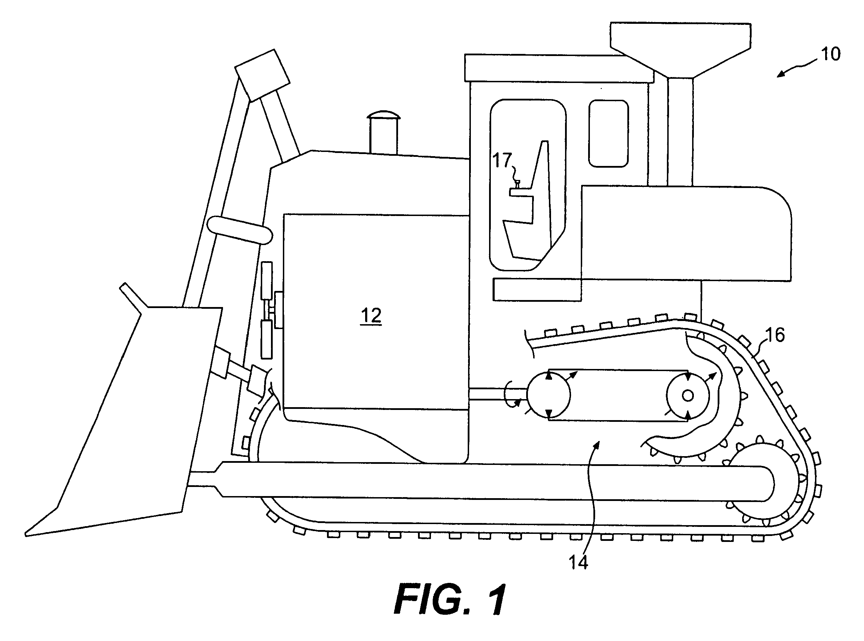

Fig. 1 illustrates an exemplary embodiment of a work machine 10 having a power source 12 and a transmission 14. Transmission 14 may be connected to a plurality of traction devices 16 (only one shown in Fig. 1) controlled by a steering device 17. Power source 12 may be an engine such as, for example, a diesel engine, a gasoline engine, a natural gas engine, or any other engine apparent to one skilled in the art. Power source 12 may also include other sources of power such as a fuel cell, a power storage device, or any other source of power known in the art. Transmission 14 may be a hydrostatic transmission, an electric transmission, a mechanical transmission, a hydro-mechanical transmission or any other means for transmitting power from a power source to a traction device. Traction devices 16 may include tracks, belts, wheels, tires, or any device for moving the work machine. Steering device 17 may include one or more of a steering wheel, a joystick, a lever, a pedal, or any other device for steering the work machine.

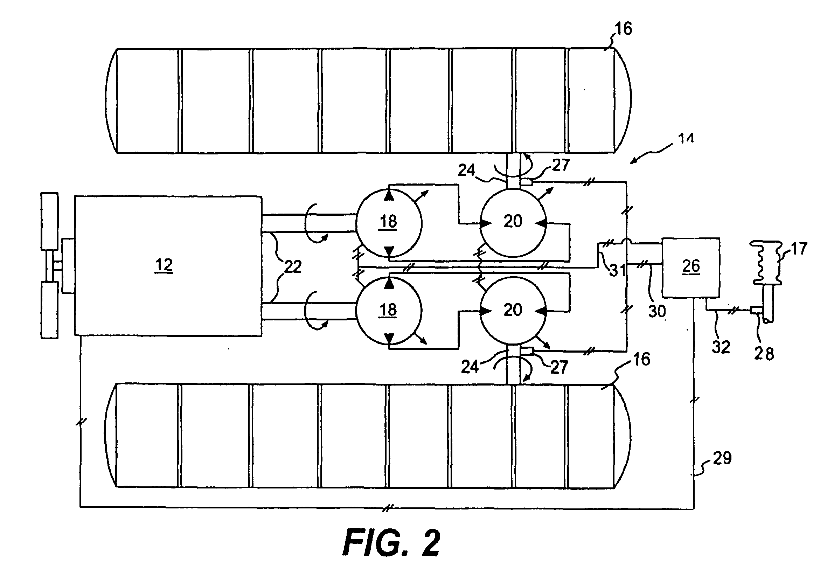

As illustrated in Fig. 2, transmission 14 may be connected to power source 12 and may include two pumps 18 fluidly connected to two motors 20 in a dual-path configuration. Pumps 18 and motors 20 may be variable displacement, variable delivery, fixed displacement, or any other configuration known in the art. Each of pumps 18 may be directly connected to power source 12 via an input shaft 22. Alternately, pumps 18 may be connected to power source 12 via a torque converter, a gear box, or in any other manner known in the art. Transmission 14 may also include an output shaft 24 connecting each motor 20 to one of traction devices 16. Work machine 10 may or may not include a reduction gear arrangement such as, for example, a planetary arrangement disposed between each motor 20 and the associated traction device 16.

Work machine 10 includes a controller 26, one or more transmission output speed sensors 27, and a steering sensor 28. Each speed sensor 27 may be proximally disposed relative to output shaft 24 and configured to generate a signal indicative of the rotational speed of output shaft 24 that corresponds to a work machine travel speed. Alternately, speed sensor 27 may be proximally disposed relative to traction device 16, or may be in any other location for generating a signal that corresponds to work machine travel speed. Sensor 28 may be proximally disposed relative to steering device 17 and configured to generate a signal indicative of a requested work machine directional change as input by an operator. Controller 26 may be in communication with power source 12, speed sensors 27, variable displacement pumps 18 and motors 20, and sensor 28 via control lines 29, 30, 31, and 32, respectively. Control lines 29, 30, 31, and 32 may be digital, analog, or mixed types of communication lines. Alternately, communication with the various components may be implemented by means of mechanical or hydraulic lines.

Controller 26 may include all the components required to run an application such as, for example, a memory, a secondary storage device, and a central processing unit. Controller 26 may, however, contain additional or different components such as, for example, mechanical or hydro-mechanical devices. Various other known circuits may be associated with controller 26 such as, for example, power supply circuitry, signal-conditioning circuitry, solenoid driver circuitry, and other appropriate circuitry.

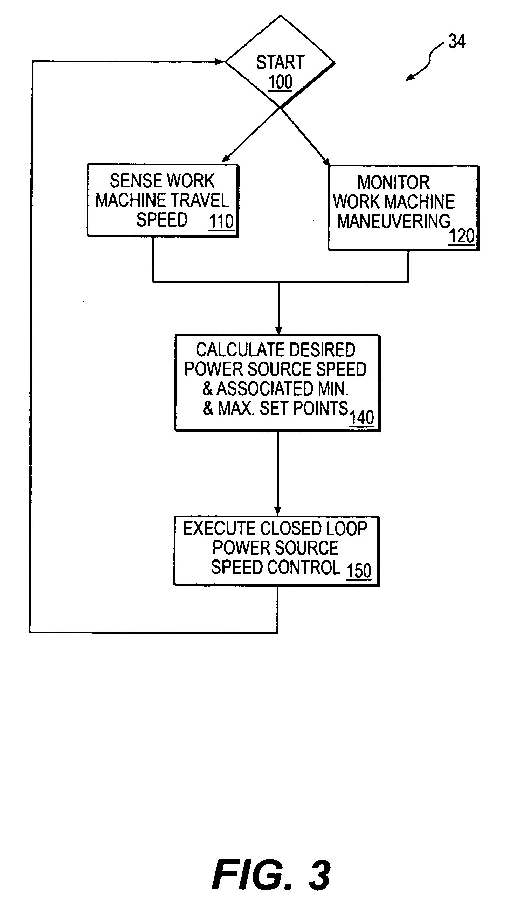

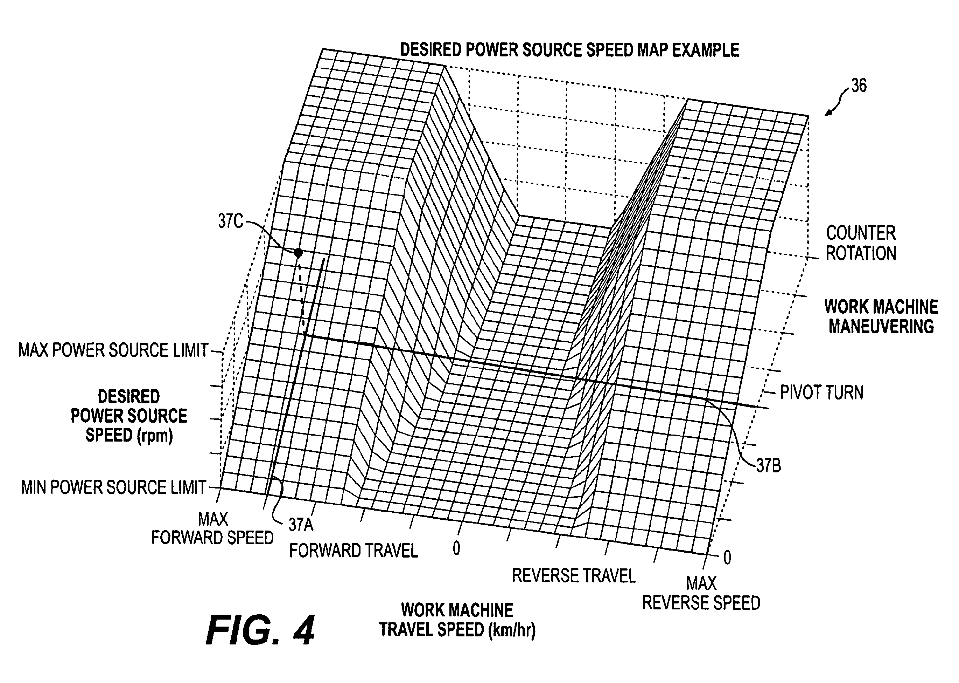

Fig. 3 is a flow chart 34 describing a method of operating work machine 10. Fig. 4 is a graph 36 that illustrates an exemplary power source map exercised by controller 26 for correlating a work machine travel speed, work machine maneuvering, and a desired power source speed. These figures will be discussed in the following section to further illustrate the disclosed system and its operation.

Industrial Applicability

The disclosed system may be applicable to any work machine that changes direction by manipulating a speed and/or a torque applied to one or more traction devices. Examples may include a track-type tractor, a track-type loader, a skid-steer loader, a hydraulic-tracked excavator, a military tank, or any other work machine known in the art that utilizes independent traction control for steering.

As described above, changing the direction of a typical work machine may require large amounts of torque from the ratio control devices. Specifically, the torque from the pump 18 and motor 20 that propels an outside (relative to the curvature of the turn) traction device 16 may be significantly greater during a turning operation than when the work machine travels in a straight direction. The disclosed work machine 10 may account for these differences by varying power source speed and/or the displacement of pumps 18 and motors 20 during a directional change. For example, proportionately increasing power source speed, and decreasing the output ratio of the pump 18 and motor 20 associated with the outside traction device 16 increases the torque capacity of transmission 14 without changing the resulting speed of the outside traction device 16. Independently changing an output ratio of transmission 14 may or may not affect the output speed of power source 12. This increased torque capacity of motor 20 associated with the outside traction device 16 may facilitate full or partial utilization of a regenerative braking power that the pump 18 and motor 20 associated with an inside traction device 16 absorb during execution of the requested turning operation. Therefore, a smaller (lower comer power), lower cost transmission 14 that efficiently propels the work machine in a straight direction can also provide the torque for performing efficient turning operations. Such smaller transmissions, in addition to being a lower cost, may produce less heat and require less cooling capacity than their larger (higher comer power) counterparts.

The directional change control strategy of work machine 10 will now be explained in detail. As outlined in flow chart 34 of Fig. 3, a method of operating work machine 10 during a turning event begins at step 100. At step 110, controller 26 senses the work machine travel speed via speed sensor 27. At step 120, which may or may not occur simultaneously with step 110, controller 26 monitors work machine maneuvering.

Work machine maneuvering may be monitored in several ways. Work machine maneuvering may be monitored by comparing an indicated travel speed from sensor 27 located on one side of work machine 10 with another sensor 27 located on an opposite side of work machine 10. The difference in travel speeds between opposite sides of work machine 10 may be indicative of the severity of a turn radius initiated during maneuvering of work machine 10. The difference in travel speeds may also be determined by monitoring command speed signals sent to transmission 14. Work machine maneuvering may also be monitored by sensing operator input to steering device 17. A work machine operator may manipulate steering device 17 to indicate a requested change in work machine direction. In response to the operator input to steering device 17 (i.e., a requested directional change), sensor 28 may send a signal via communication line 32 to controller 26, indicative of the requested directional change.

At step 140, controller 26 may determine a desired power source speed and associated minimum and maximum power source speed set points required to efficiently maneuver the work machine. Controller 26 may compare the sensed work machine travel speed and the value of the work machine maneuvering signal generated in step 120 with a map stored within a memory of work machine 10 to determine a desired power source speed. Alternately, a desired work machine travel speed as input by an operator and the value of the work maneuvering signal may be compared with the map to determine the desired power source speed. The map may be in the form of a look-up table, one or more equations, or another form for storing information.

An example of such a map is illustrated in graph 36 of Fig. 4. Work machine travel speed is plotted along one axis of graph 36. The travel speed axis is split between a forward and reverse direction at a center point of zero kilometers per hour, and extends to the left and right in increasing speeds of opposite travel directions. Work machine maneuvering is plotted along another axis of graph 36, with the turn radius of the work machine increasing from back to front of graph 36. Using the sensed work machine travel speed and the value of the work machine maneuvering signal, a desired power source speed may be determined based on a projection onto a contoured surface of graph 36. The desired power source speed is one that may efficiently maneuver the work machine.

For example, a forward travel speed may be sensed during step 110 and represented as a line 37a on graph 36. The turn radius value of the work machine maneuvering signal sensed in step 120 may be represented as a line 37b on graph 36. Extending a line in the desired power source speed axis direction from the intersection of lines 37a and 37b to the contoured surface of graph 36 determines the desired power source speed 37c, as shown in Fig. 4. For certain travel speed values, a decreasing turning radius will also result in an increasing desired power source speed.

After determining a desired power source speed, minimum and maximum power source speed set points may be determined as offsets from the desired power source speed. For example, offsets $\delta_1$ and $\delta_2$ may be added and/or subtracted from the desired power source speed 37c, determined in the above example, to determine maximum and minimum power source speed set points:

$$\text{Set Point}_{Max} = 37c + \delta_1 \qquad\qquad \text{Set Point}_{Min} = 37c - \delta_2$$

It is contemplated that the offset used to determine the minimum power source speed set point may or may not be the same as the offset used to determine the maximum power source speed set point. It is also contemplated that the minimum and maximum power source speed set points may be determined as other functions of the desired power source speed. One of the minimum and maximum power source speed set points may also be determined as a function of the other. In addition, the power source speed set points may be determined directly, in a manner similar to that described above for determining the power source speed, without determining the desired power source speed. The desired power source speed and/or set points may also be determined as functions of parameters other than machine operating and maneuvering parameters.

After the desired power source speed and associated set points are determined, control continues in step 150 with closed loop speed control. Although a desired power source speed has been determined, the minimum and maximum power source speed set points may actually drive the closed loop speed control. The minimum and maximum set points essentially create a zone of acceptable tolerance around the desired power source speed, and the closed loop speed control may change operating parameters of the power source and/or transmission 14 until the power source speed is within the tolerance zone. For example, if the current power source speed is below the minimum set point, operating parameters of the power source 12 and/or transmission 14 may be changed to increase the power source speed. If the current power source speed is above the maximum set point, operating parameters of the power source 12 and/or transmission 14 may be changed to decrease the power source speed. Controller 26 continuously monitors power source speed and adjusts the power source operating parameters and/or transmission parameters when the power source speed deviates from the tolerance zone set by the minimum and maximum set points.

**Claims**

1. A work machine (10), comprising:

   a first traction means (16) on one side of the work machine for moving the work machine;
   a first transmission means (18, 20) for transmitting power to the first traction means (16);
   a second traction means (16) on the opposite side of the work machine for moving the work machine;
   a second transmission means (18, 20) for transmitting power to the second traction means (16);
   a power source (12) configured to drive the first and second transmission means (18, 20);
   a first sensor (28) configured to generate a signal indicative of work machine steering;
   at least one second sensor (27) configured to generate a signal indicative of a work machine operating speed parameter,
   a means (26) for controlling an output of the power source (12) in response to the signal indicative of work machine steering and in response to the signal indicative of a work machine operating speed parameter
   wherein the means (26) for controlling an output of the power source (12) is also a means for controlling a speed ratio of the first and second transmission means (18, 20) in response to the signal indicative of work machine steering,
   wherein the means (26) for controlling an output of the power source (12) and the speed ratio of the first and second transmission means (18, 20) are adapted for decreasing the speed ratio of one of the first and second transmission means (18, 20) associated with the outside traction means (16) proportionally to the increased output speed of the power source (12) during a steering operation so as to maintain the resulting output speed of the said one of the first and second transmission means (18, 20) constant.

2. A method of operating a work machine (10) having a power source (12), comprising:

   driving a first transmission means (18, 20) that is operatively connected to a first traction means (16) on one side of the work machine;
   driving a second transmission means (18, 20) that is operatively connected to a second traction means (16) on the opposite side of the work machine;
   receiving an input from a first sensor (28) indicative of work machine steering;
   receiving first and second inputs from a second sensor (27) indicative of first and second traction means speeds, respectively
   increasing an output of the power source (12) in response to the input indicative of work machine steering and in response to the first and second inputs indicative of first and second traction means speeds,
   decreasing a speed ratio of one of the first and second transmission means (18, 20) associated with the outside traction means during a steering operation proportionally to the increased output speed of the power source (12) so as to maintain the resulting output speed of the said one of the first and second transmission means (18, 20) constant.

3. The method of claim 2, wherein controlling an output of the power source (12) includes:

calculating a desired output of the power source (12);
commanding a desired output speed range of the power source (12); and
changing the speed ratio of at least one of the first and second transmission means (18, 20) when the output speed of the power source (12) is outside of the desired output speed range.

4. The method according to one of the preceding claims wherein the transmission means (18, 20) are hydraulic transmission means.

**Patentansprüche**

1. Arbeitsmaschine (10), die Folgendes aufweist:

erste Traktionsmittel (16) auf einer Seite der Arbeitsmaschine zum Bewegen der Arbeitsmaschine;
erste Getriebemittel (18, 20) zum Übertragen von Leistung zu den ersten Traktionsmitteln (16);
zweite Traktionsmittel (16) auf der gegenüberliegenden Seite der Arbeitsmaschine zum Bewegen der Arbeitsmaschine;
zweite Getriebemittel (18, 20) zum Übertragen von Leistung zu den zweiten Traktionsmitteln (16);
eine Leistungsquelle (12), die konfiguriert ist, um die ersten und zweiten Getriebemittel (18, 20) anzutreiben;
einen ersten Sensor (28), der konfiguriert ist, um ein Signal zu erzeugen, welches eine Arbeitsmaschinenlenkgröße anzeigt;
zumindest einen zweiten Sensor (27), der konfiguriert ist, um ein Signal zu erzeugen, welches einen Arbeitsmaschinenbetriebsdrehzahlparameter anzeigt;
Mittel (26) zum Steuern einer Ausgabe der Leistungsquelle (12) ansprechend auf das Signal, welches die Arbeitsmaschinenlenkgröße anzeigt und ansprechend auf das Signal, welches einen Arbeitsmaschinenbetriebsdrehzahlparameter anzeigt,
wobei die Mittel (26) zum Steuern einer Ausgabe der Leistungsquelle (12) auch Mittel zum Steuern einer Drehzahlübersetzung der ersten und zweiten Getriebemittel (18, 20) ansprechend auf das Signal sind, welches die Arbeitsmaschinenlenkgröße anzeigt,
wobei die Mittel (26) zum Steuern einer Ausgabe der Leistungsquelle (12) und die Drehzahlübersetzung der ersten und zweiten Getriebemittel (18, 20) geeignet sind, um die Drehzahlübersetzung von einem der ersten und zweiten Getriebemittel (18, 20), welches mit den außen gelegenen Traktionsmitteln (16) assoziiert ist, proportional zur gesteigerten Ausgangsdrehzahl der Leistungsquelle 12 während eines Lenkvorgangs zu verringern, um die resultierende Ausgangsdrehzahl des erwähnten einen Getriebemittels der ersten und zweiten Getriebemittel (18, 20) konstant zu halten.

2. Verfahren zum Betrieb einer Arbeitsmaschine (10) mit einer Leistungsquelle (12), welches Folgendes aufweist:

Antreiben eines ersten Getriebemittels (18, 20), welches betriebsmäßig mit einem ersten Traktionsmittel (16) auf einer Seite der Arbeitsmaschine verbunden ist;
Antreiben eines zweiten Getriebemittels (18, 20), welches betriebsmäßig mit zweiten Traktionsmitteln (16) auf der gegenüberliegenden Seite der Arbeitsmaschine verbunden ist;
Empfangen einer Eingangsgröße von einem ersten Sensor (28), welche eine Lenkgröße der Arbeitsmaschine anzeigt;
Empfangen von ersten und zweiten Eingangsgrößen von einem zweiten Sensor (27), welche jeweils erste und zweite Traktionsmitteldrehzahlen anzeigen;
Vergrößern einer Ausgabe der Leistungsquelle (12) ansprechend auf die Eingangsgröße, welche die Lenkgröße der Arbeitsmaschine anzeigt, und ansprechend auf die ersten und zweiten Eingangsgrößen, welche die ersten und zweiten Traktionsmitteldrehzahlen anzeigen,
Verringern einer Drehzahlübersetzung von einem der ersten und zweiten Getriebemittel (18, 20), welches mit den außen gelegenen Traktionsmitteln assoziiert ist, während eines Lenkvorgangs, und zwar proportional zur gesteigerten Ausgangsdrehzahl der Leistungsquelle (12), um die daraus resultierende Ausgangsdrehzahl des erwähnten einen Getriebemittels der ersten und zweiten Getriebemittel (18, 20) konstant zu halten.

3. Verfahren nach Anspruch 2, wobei das Steuern einer Ausgabe der Leistungsquelle (12) Folgendes aufweist:

Berechnen einer erwünschten Ausgabe der Leistungsquelle (12);
Anweisen eines erwünschten bzw. Soll-Ausgangsdrehzahlbereiches der Leistungsquelle (12); und

Verändern der Drehzahlübersetzung von mindestens einem der ersten und zweiten Getriebemittel (18, 20), wenn die Ausgangsdrehzahl der Leistungsquelle (12) außerhalb des erwünschten Ausgangsdrehzahlbereiches ist.

**4.** Verfahren nach einem der vorhergehenden Ansprüche, wobei die Getriebemittel (18, 20) Hydraulikgetriebemittel sind.


**Revendications**

**1.** Engin de travaux (10), comprenant :

un premier moyen de traction (16) d'un côté de l'engin de travaux pour déplacer l'engin de travaux ;
un premier moyen de transmission (18, 20) pour transmettre de la puissance au premier moyen de traction (16) ;
un deuxième moyen de traction (16) du côté opposé de l'engin de travaux pour déplacer l'engin de travaux ;
un deuxième moyen de transmission (18, 20) pour transmettre de la puissance au deuxième moyen de traction (16) ;
une source motrice (12) agencée pour entraîner les premier et deuxième moyens de transmission (18, 20) ;
un premier capteur (28) agencé pour générer un signal indicatif de la direction de l'engin de travaux ;
au moins un deuxième capteur (27) agencé pour générer un signal indicatif d'un paramètre de vitesse de fonctionnement de l'engin de travaux,
un moyen (26) de commande d'une sortie de la source motrice (12) en réponse au signal indicatif de la direction de l'engin de travaux et en réponse au signal indicatif d'un paramètre de vitesse de fonctionnement de l'engin de travaux ;
dans lequel le moyen (26) de commande d'une sortie de la source motrice (12) est aussi un moyen de commande d'un rapport de vitesse entre les premier et deuxième moyens de transmission (18, 20) en réponse au signal indicatif de la direction de l'engin de travaux,
dans lequel le moyen (26) de commande d'une sortie de la source motrice (12) et du rapport de vitesse entre les premier et deuxième moyens de transmission (18, 20) est adapté pour diminuer le rapport de vitesse de l'un des premier et deuxième moyens de transmission (18, 20), associé au moyen de traction extérieur (16), proportionnellement à la vitesse de sortie augmentée de la source motrice (12) pendant une opération de changement de direction de façon à maintenir constante la vitesse de sortie résultante dudit un des premier et deuxième moyens de transmission (18, 20).

**2.** Procédé d'actionnement d'un engin de travaux (10) comportant une source motrice (12), comprenant les étapes suivantes :

entraîner un premier moyen de transmission (18, 20) qui est connecté fonctionnellement à un premier moyen de traction (16) d'un côté de l'engin de travaux ;
entraîner un deuxième moyen de transmission (18, 20) qui est connecté fonctionnellement à un deuxième moyen de traction (16) du côté opposé de l'engin de travaux ;
recevoir une entrée provenant d'un premier capteur (28), indicative de la direction de l'engin de travaux ;
recevoir des première et deuxième entrées provenant d'un deuxième capteur (27) indicatives des vitesses des premiers et deuxièmes moyens de traction, respectivement ;
augmenter la sortie de la source motrice (12) en réponse à l'entrée indicative de la direction de l'engin de travaux et en réponse aux première et deuxième entrées indicatives des vitesses des premier et deuxième moyens de traction,
diminuer le rapport de vitesse de l'un des premier et deuxième moyens de transmission (18, 20), associé au moyen de traction extérieur, pendant une opération de changement de direction proportionnellement à la vitesse de sortie augmentée de la source de motrice (12) de façon à maintenir constante la vitesse de sortie résultante dudit un des premier et deuxième moyens de transmission (18, 20).

**3.** Procédé selon la revendication 2, dans lequel la commande d'une sortie de la source motrice (12) comprend les étapes suivantes :

calculer une sortie souhaitée de la source motrice (12) ;
commander une plage de vitesses de sortie souhaitée de la source motrice (12) ; et
changer le rapport de vitesse d'au moins l'un des premier et deuxième moyens de transmission (18, 20) lorsque la vitesse de sortie de la source motrice (12) est en dehors de la plage de vitesses de sortie souhaitée.

4. Procédé selon l'une quelconque des revendications précédentes, dans lequel les moyens de transmission (18, 20) sont des moyens de transmission hydrauliques.

**FIG. 1**

*FIG. 2*

FIG. 3

**DESIRED POWER SOURCE SPEED MAP EXAMPLE**

36

37C

COUNTER
ROTATION

MAX POWER SOURCE LIMIT

**WORK MACHINE
MANEUVERING**

**DESIRED
POWER SOURCE
SPEED (rpm)**

PIVOT TURN

MIN POWER SOURCE LIMIT

37B

MAX
FORWARD SPEED

37A

FORWARD TRAVEL

0

REVERSE TRAVEL

0

MAX
REVERSE SPEED

**WORK MACHINE
TRAVEL SPEED (km/hr)**

*FIG. 4*

EP 1 561 672 B1

**EP 1 561 672 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6654676 B
- US 6138782 A
- US 20020193927 A
- US 5611405 A
- US 5473541 A
- GB 2221518 A